# EUROPEAN PATENT APPLICATION

(11) **EP 4 645 880 A1**
(43) Date of publication of application: **05.11.2025**
(21) Application number: 23911307.9
(22) Date of filing: 27.09.2023
(51) Int. Cl.: H04N 21/4402, H04N 5/262, H04N 5/66, H04N 23/951

(54) **VIDEO SIGNAL PROCESSING DEVICE, VIDEO SIGNAL PROCESSING METHOD, AND PROGRAM**

(30) Priority: 27.12.2022 JP 2022209766
(71) Applicant: Panasonic Intellectual Property Management Co., Ltd., Kadoma-shi, Osaka 571-0057 (JP)
(72) Inventor: TAKATORI, Masahiro, Kadoma-shi, Osaka 571-0057 (JP)
(74) Representative: Novagraaf International SA
(86) International application number: PCT/JP2023/035300
(87) International publication number: WO 2024/142523

(57) **Abstract**

A video signal processing device includes: an obtainer that obtains a first video signal through broadcast or through communication via a network; an expander (111) that performs an up-scaling process of expanding the first video signal obtained, according to a first parameter which is set; and a processor that: (i) when the first video signal is a broadcast video signal obtained through the broadcast and a resolution of the first video signal has changed, changes the first parameter according to the resolution changed; and (ii) when the first video signal is a communication video signal obtained through the communication via the network, sets the first parameter for use in the up-scaling process by the expander to a fixed value.

## Description

### [Technical Field]

The present disclosure relates to a video signal processing device, a video signal processing method, and a program for improving picture quality.

### [Background Art]

PTL 1 discloses a video output device that, when a change in resolution of a video content is detected, determines a scaling ratio for the video content with the changed resolution according to a degree of reduction from the original resolution to the changed resolution, and expands the video content at the determined scaling ratio.

### [Citation List]

### [Patent Literature]

[PTL 1] Japanese Unexamined Patent Application Publication No. 2008-67109

### [Summary of Invention]

### [Technical Problem]

The present disclosure provides a video signal processing device or the like that, when the resolution of an obtained video signal changes, can prevent reduction in picture quality and reduce a difference in picture quality between before and after the change in resolution.

### [Solution to Problem]

A video signal processing device according to one aspect of the present disclosure includes: an obtainer that obtains a first video signal through broadcast or through communication via a network; an expander that performs an up-scaling process of expanding the first video signal obtained, according to a first parameter which is set; and a processor that: (i) when the first video signal is a broadcast video signal obtained through the broadcast and a resolution of the first video signal has changed, changes the first parameter according to the resolution changed; and (ii) when the first video signal is a communication video signal obtained through the communication, sets the first parameter to a fixed value.

Moreover, a video signal processing method according to one aspect of the present disclosure includes: obtaining a first video signal through broadcast or through communication via a network; performing an up-scaling process of expanding the first video signal obtained, according to a first parameter which is set; and (i) when the first video signal is a broadcast video signal obtained through the broadcast and a resolution of the first video signal has changed, changing the first parameter according to the resolution changed; and (ii) when the first video signal is a communication video signal obtained through the communication, setting the first parameter to a fixed value.

It is to be noted that general or specific aspects of the present disclosure may be implemented by a system, an integrated circuit, a computer program, or a computer-readable non-transitory recording medium such as a CD-ROM, or may be implemented by any combination of systems, integrated circuits, computer programs, and non-transitory recording media.

### [Advantageous Effects of Invention]

When the resolution of an obtained video signal changes, the video signal processing device or the like according to the present disclosure can prevent reduction in picture quality and reduce a difference in picture quality between before and after the change in resolution.

### [Brief Description of Drawings]

[FIG. 1]

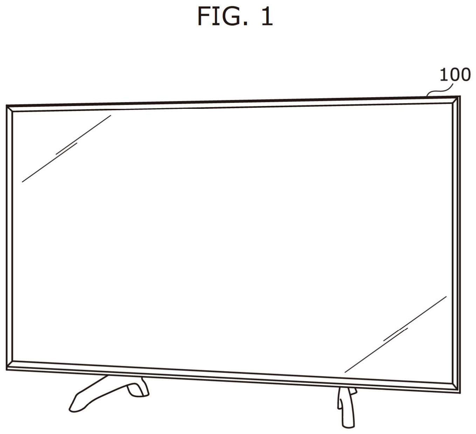

   FIG. 1 is a diagram illustrating the appearance of a display apparatus according to a present embodiment.
[FIG. 2]

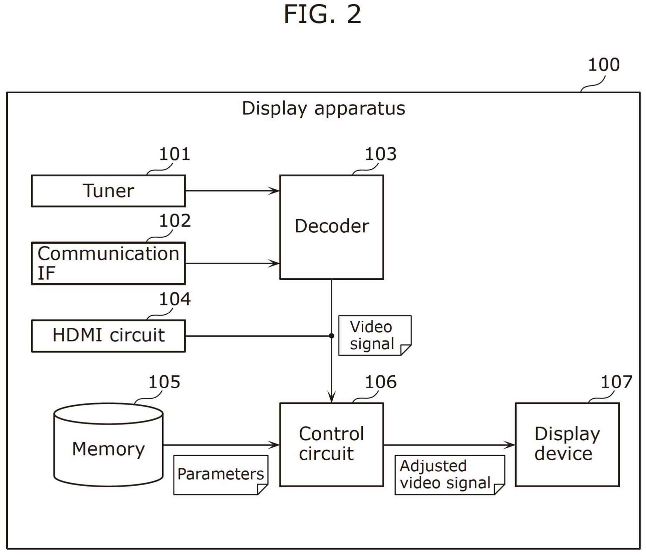

   FIG. 2 is a block diagram illustrating an example of the hardware configuration of the display apparatus according to the present embodiment.
[FIG. 3]

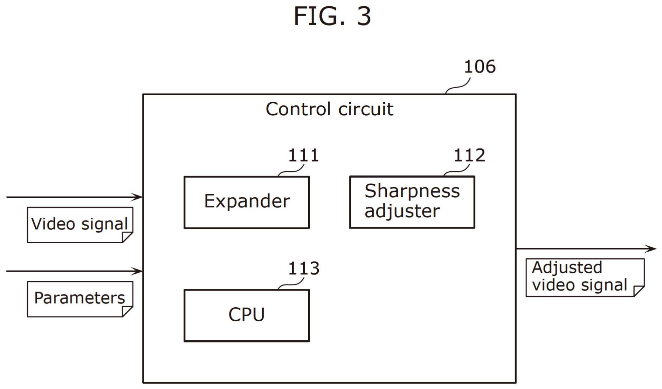

   FIG. 3 is a block diagram illustrating an example of the configuration of a control circuit according to the present embodiment.
[FIG. 4A]

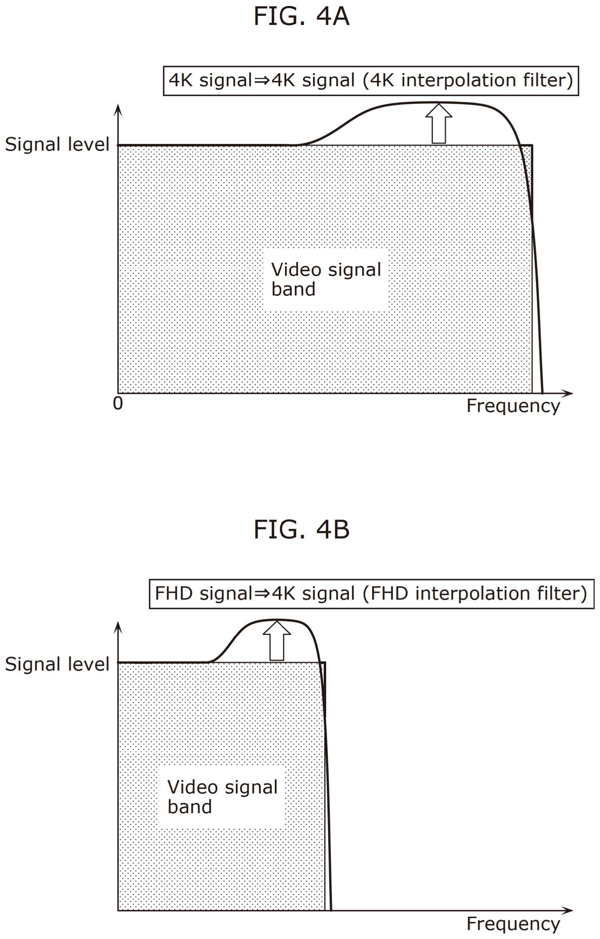

   FIG. 4A is a diagram for explaining an up-scaling process for a broadcast video signal with 4K resolution.
[FIG. 4B]
   FIG. 4B is a diagram for explaining an up-scaling process for a broadcast video signal with FHD resolution.
[FIG. 4C]

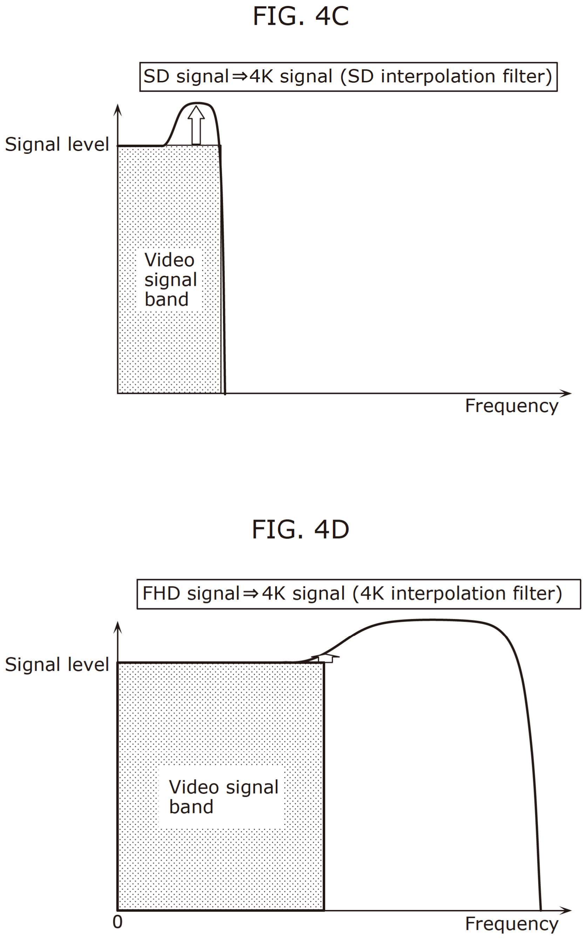

   FIG. 4C is a diagram for explaining an up-scaling process for a broadcast video signal with SD resolution.
[FIG. 4D]
   FIG. 4D is a diagram for explaining an up-scaling process for a communication video signal with FHD resolution.
[FIG. 4E]

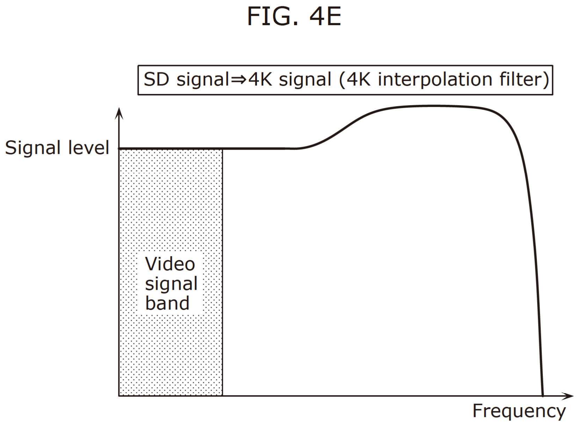

   FIG. 4E is a diagram for explaining an up-scaling process for a communication video signal with SD resolution.
[FIG. 5A]

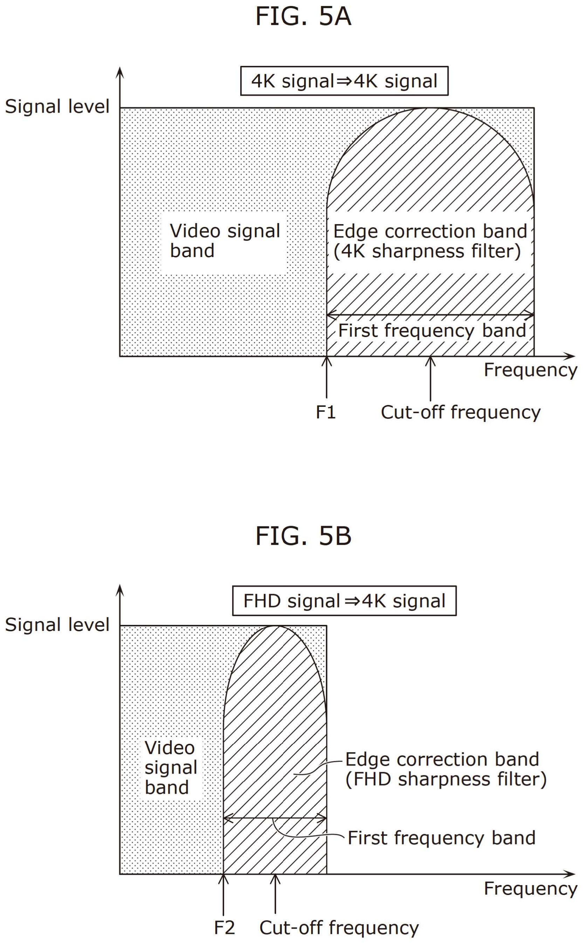

   FIG. 5A is a diagram for explaining the first example of sharpness adjustment for a broadcast video signal with 4K resolution.
[FIG. 5B]
   FIG. 5B is a diagram for explaining the first example of sharpness adjustment for a broadcast video signal with FHD resolution.
[FIG. 5C]

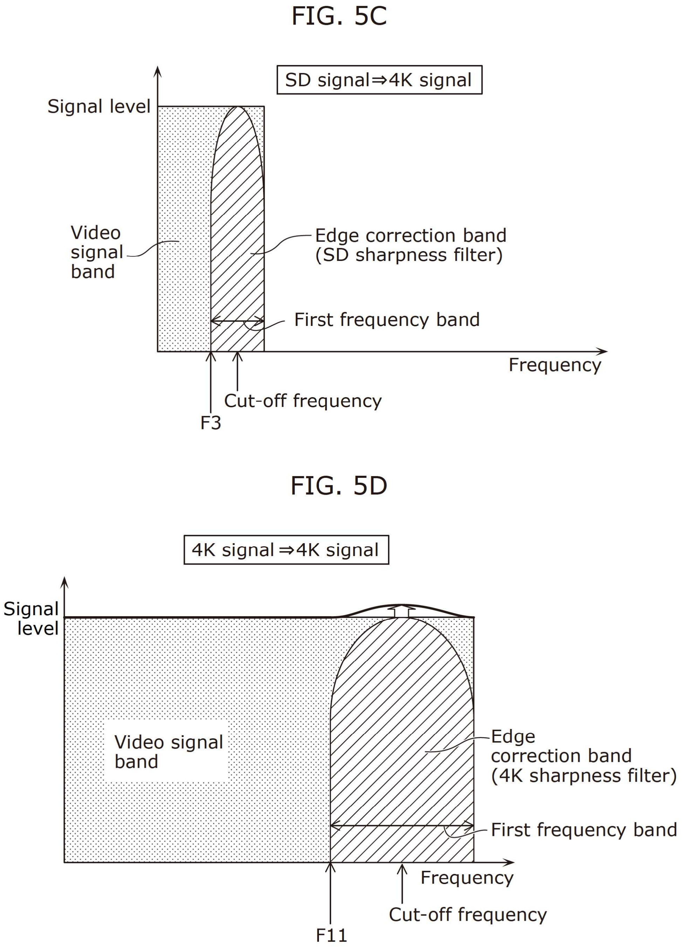

   FIG. 5C is a diagram for explaining the first example of sharpness adjustment for a broadcast video signal with SD resolution.
[FIG. 5D]
   FIG. 5D is a diagram for explaining sharpness adjustment for a communication video signal with 4K resolution.
[FIG. 5E]

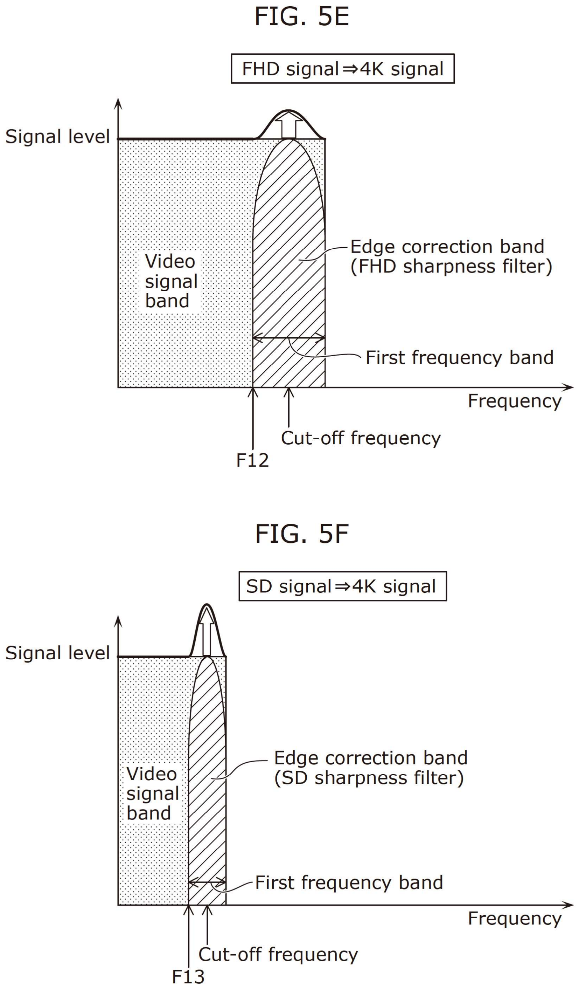

   FIG. 5E is a diagram for explaining sharpness adjustment for a communication video signal with FHD resolution.
[FIG. 5F]
   FIG. 5F is a diagram for explaining sharpness adjustment for a communication video signal with SD resolution.
[FIG. 5G]

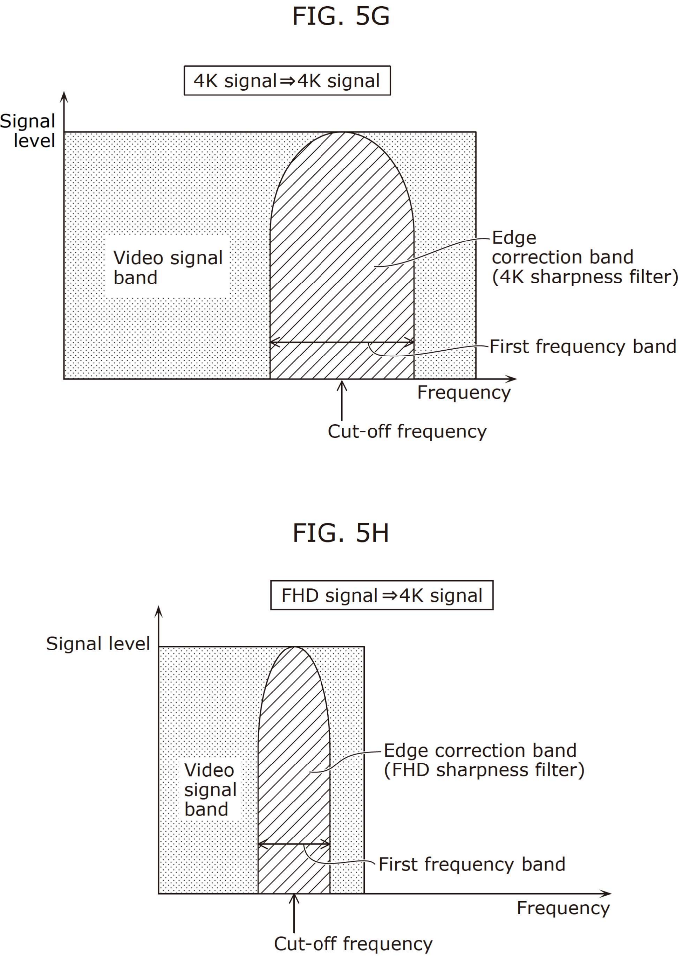

   FIG. 5G is a diagram for explaining the second example of sharpness adjustment for a broadcast video signal with 4K resolution.
[FIG. 5H]
   FIG. 5H is a diagram for explaining the second example of sharpness adjustment for a broadcast video signal with FHD resolution.
[FIG. 5I] FIG. 5I is a diagram for explaining the second example of sharpness adjustment for a broadcast video signal with SD resolution.
[FIG. 6A] FIG. 6A is a table illustrating basic information on the second parameter.
[FIG. 6B]

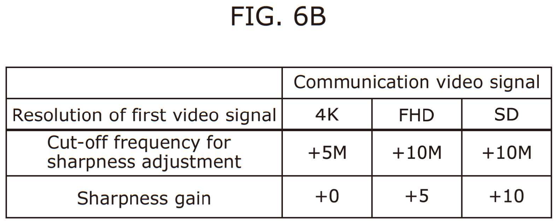

   FIG. 6B is a table illustrating a difference between the second parameter for a communication video signal and the second parameter for a broadcast video signal.
[FIG. 6C]

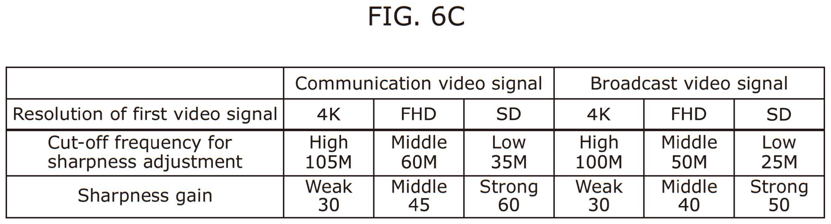

   FIG. 6C is a table illustrating the second parameter after the difference is applied to the basic information.
[FIG. 7]

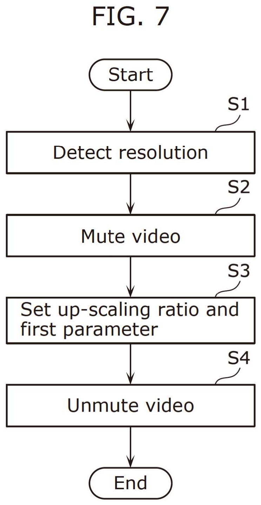

   FIG. 7 is a flowchart illustrating an example of an initial setting process by the display apparatus.
[FIG. 8]

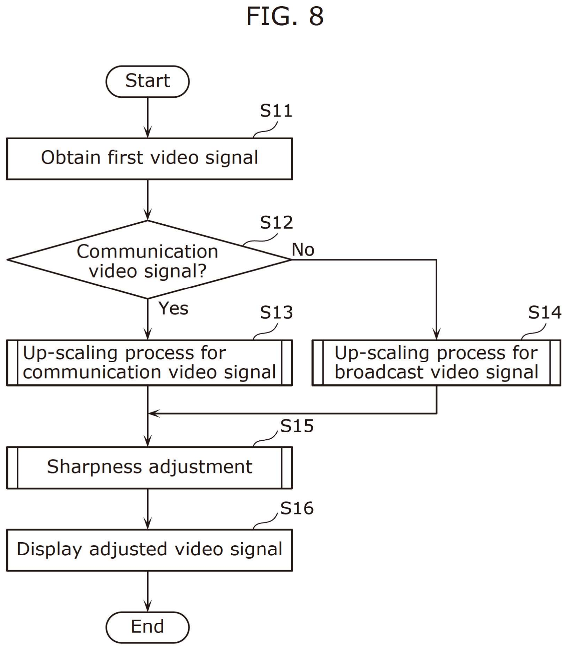

   FIG. 8 is a flowchart illustrating an example of a video signal process by the display apparatus.
[FIG. 9]

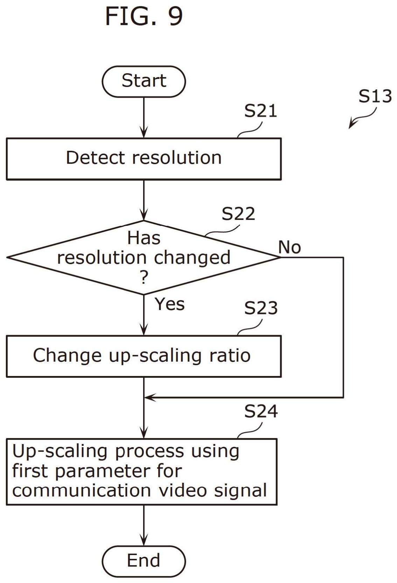

   FIG. 9 is a flowchart illustrating an example of an up-scaling process for a communication video signal.
[FIG. 10]

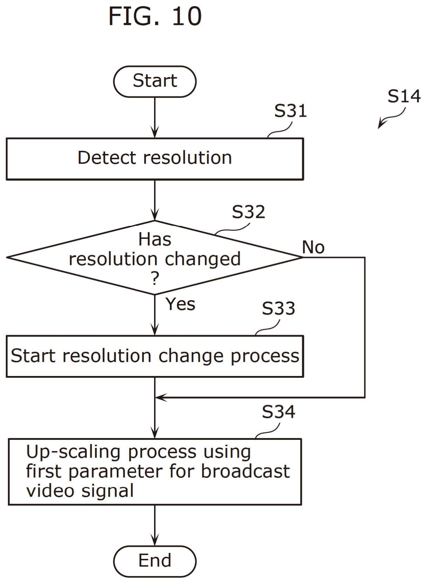

   FIG. 10 is a flowchart illustrating an example of an up-scaling process for a broadcast video signal.

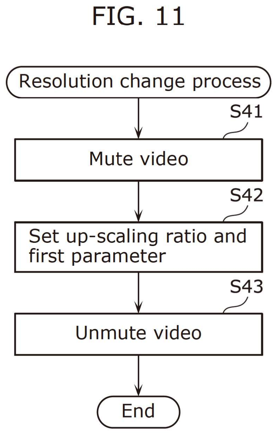

[FIG. 11] FIG. 11 is a flowchart illustrating an example of a resolution change process.

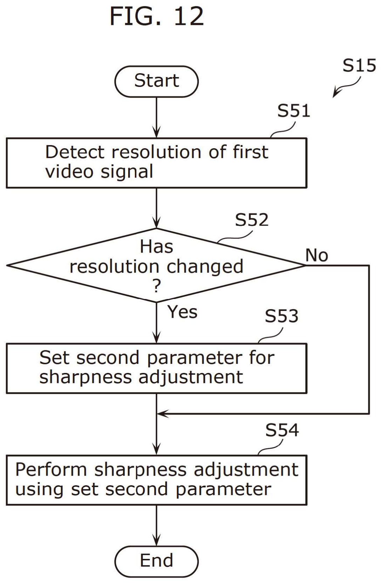

[FIG. 12] FIG. 12 is a flowchart illustrating an example of sharpness adjustment.

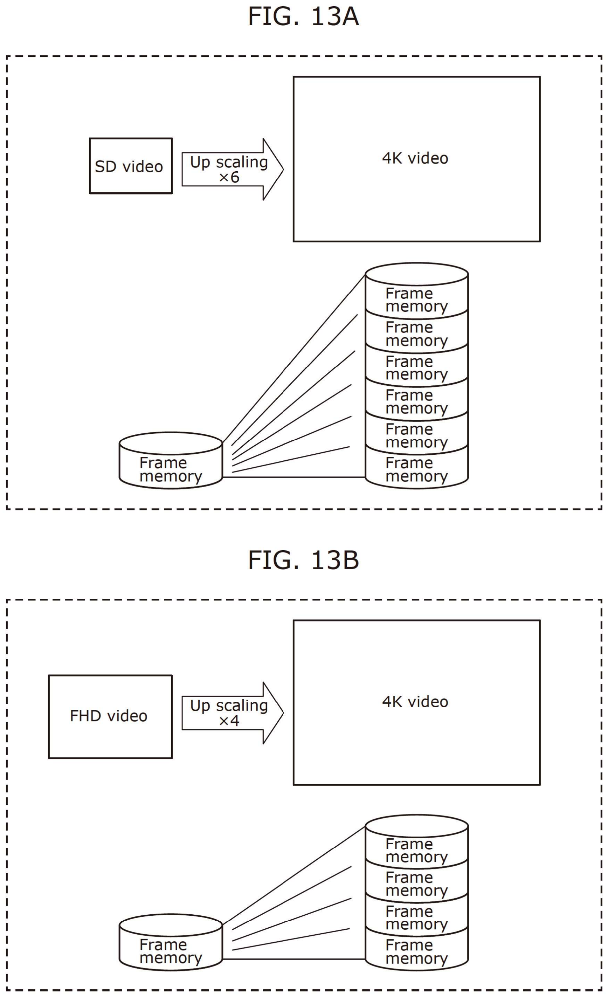

[FIG. 13A] FIG. 13A is a diagram for explaining a problem arising in the up-scaling process for a broadcast video signal.
[FIG. 13B] FIG. 13B is a diagram for explaining another problem arising in the up-scaling process for a broadcast video signal.

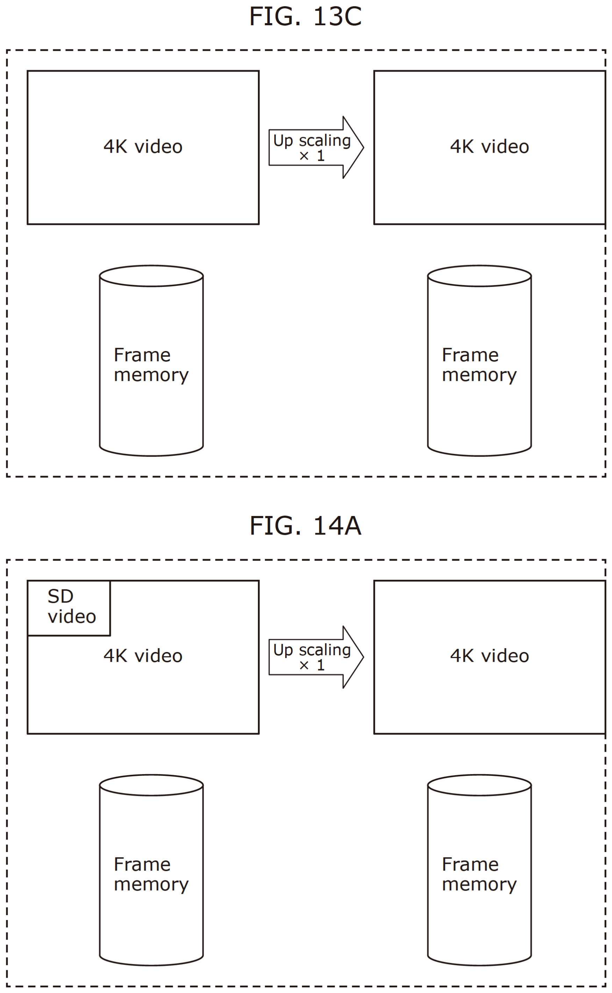

[FIG. 13C] FIG. 13C is a diagram for explaining yet another problem arising in the up-scaling process for a broadcast video signal.
[FIG. 14A] FIG. 14A is a diagram for explaining a problem arising in the up-scaling process for a communication video signal.

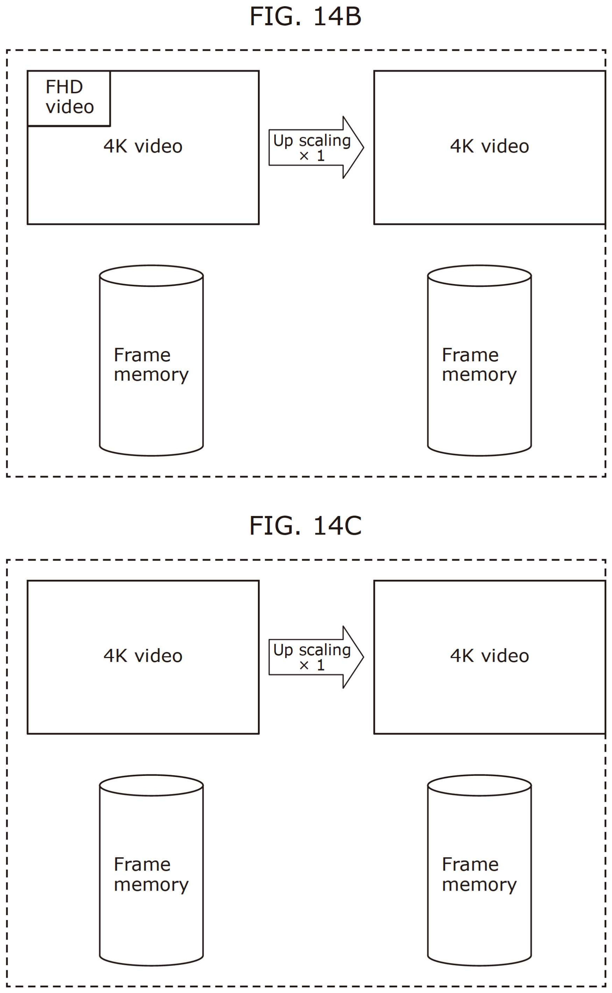

[FIG. 14B] FIG. 14B is a diagram for explaining another problem arising in the up-scaling process for a communication video signal.
[FIG. 14C] FIG. 14C is a diagram for explaining yet another problem arising in the up-scaling process for a communication video signal.

### [Description of Embodiments]

### (Underlying Knowledge Forming Basis of the Present Disclosure)

The inventors of the present disclosure have found that the following problems arise with the video signal processing device described in "Background Art".

A process of increasing a resolution by interpolating pixels of a video whose resolution is lower than a display resolution that is the resolution of a display apparatus (hereinafter, referred to as an "up-scaling process") needs a process using an interpolation filter according to a degree of increase in resolution (up-scaling ratio). However, it takes a time of several frames to switch the interpolation filter, and thus frames to which the process according to the up-scaling ratio is not applied are generated. In other words, the process according to the up-scaling ratio is not applied to frames during a change in resolution. Accordingly, the picture quality of a video during a change in resolution is reduced (i.e., the picture quality of a video immediately after the change in resolution is reduced), and a difference in picture quality between before and after the change in resolution is increased.

The number of pixels during a video signal period (hereinafter, referred to as a "resolution"), which is a period excluding a blanking period in one frame of the video signal format of a broadcasted video signal or a video signal reproduced by and provided from an external reproduction device (hereinafter, referred to as a "broadcast video signal"), may change for each of programs or provided contents (hereinafter, referred to as programs), but is generally managed at the broadcast side or the content creating side not to change during a scene or a program. In other words, in the case of the broadcast video signal, the timing of the change in resolution is the same as the timing of switching the program. For this reason, in the video signal processing device, a seamless video process is not required even when the process according to the up-scaling ratio is performed. For example, the video signal processing device turns off display of frames to which the process according to the up-scaling ratio is not applied (i.e., mutes the video), thereby performing the video signal process in a manner that has little effect on a program. In the case where the resolution of the broadcast video signal switches, the video content itself switches or switching occurs by a user control for changing a channel. Accordingly, turning off frame display (i.e., muting the video) is performed in the changing process, thereby preventing a user from having a feeling of strangeness.

The resolution of a video signal distributed via the Internet (hereinafter, referred to as a "communication video signal"), such as a network video or a streaming video signal, may dynamically change for each of scenes during a program to reduce the amount of communication data due to the technical specifications at the distributing side. Alternatively, the resolution of the communication video signal may change for each of programs due to program scheduling at the distributing side. The resolution of the communication video signal also may change due to the communication state of the Internet since the allowable amount of communication data changes. Accordingly, when the video based on the communication video signal is displayed, in order to display the video without any interruption and prevent an increase in difference in picture quality even when the resolution is changed, the seamless video process is required even when the resolution switches.

In other words, when the resolution of the communication video signal has changed, a difference in definition feeling or sharpness feeling between before and after the change in resolution is increased. Accordingly, a difference in picture quality is increased.

For this reason, in the case where the seamless video process is required and the change in resolution may occur at any time as described in displaying the communication video signal, when the video signal processing device turns off display of frames to which the process according to the up-scaling ratio is not applied (i.e., mutes the video) as described for the broadcast video signal, a user is given a feeling of strangeness. Accordingly, when the communication video signal is displayed, a video process without turning off display of frames to which the process according to the up-scaling ratio is not applied is needed. When this video process is performed, a change in picture quality caused by a change in resolution is visible to a user. Accordingly, the display quality is reduced.

The inventors have found that the foregoing problems arise, and thus have conducted studies hard and conceived of a video signal processing device before and after a change in resolution.

A video signal processing device according to Aspect 1 of the present disclosure includes: an obtainer that obtains a first video signal through broadcast or through communication via a network; an expander that performs an up-scaling process of expanding the first video signal obtained, according to a first parameter which is set; and a processor that: (i) when the first video signal is a broadcast video signal obtained through the broadcast and a resolution of the first video signal has changed, changes the first parameter according to the resolution changed; and (ii) when the first video signal is a communication video signal obtained through the communication, sets the first parameter to a fixed value.

With this, when the resolution of the broadcast video signal has changed, the first parameter of the up-scaling process is changed according to the resolution. The resolution of the broadcast video signal changes only when a program is switched, and thus the video signal processing device can perform the up-scaling process appropriate to a change in resolution in a manner that has little effect during the program.

Moreover, the video signal processing device sets the first parameter of the up-scaling process to a fixed value (i.e., does not change the first parameter) regardless of a change in resolution of the communication video signal. The resolution of the communication video signal may change even during a scene or a program, and thus the video signal processing device performs the constant up-scaling process regardless of a change in resolution, thereby preventing generation of a frame to which the process according to the up-scaling ratio is not applied when the resolution changes.

As described above, when the resolution of the obtained video signal changes, the video signal processing device can prevent reduction in picture quality.

The video signal processing device according to Aspect 2 of the present disclosure is the video signal processing device according to Aspect 1, and further includes a sharpness adjuster that performs sharpness adjustment on a second video signal obtained by performing the up-scaling process on the first video signal, according to a second parameter which is set, in which when the second video signal is a video signal obtained by performing the up-scaling process on the communication video signal, the processor adjusts the second parameter to more emphasize sharpness than when the second video signal is a video signal obtained by performing the up-scaling process on the broadcast video signal.

Thus, for the communication video signal, the second parameter of the sharpness adjustment is adjusted to more emphasize the sharpness than for the broadcast video signal. Accordingly, the up-scaling process is fixed regardless of the resolution, and thus it is possible to improve the picture quality when a video signal with a low resolution is inputted using the sharpness adjustment in which the second parameter is adjusted.

The video signal processing device according to Aspect 3 of the present disclosure is the video signal processing device according to Aspect 2, in which the processor adjusts the second parameter to more emphasize sharpness as the resolution decreases.

Thus, for the communication video signal, the second parameter is adjusted to more emphasize the sharpness than for the broadcast video signal and to more emphasize the sharpness as the resolution decreases. In other words, the sharpness adjustment according to the up-scaling ratio is performed for the communication video signal, and thus, even when the up-scaling process is fixed regardless of the resolution, it is possible to perform the video signal process appropriate to the resolution for the communication video signal. Accordingly, it is possible to reduce the difference in picture quality between before and after a change in resolution.

The video signal processing device according to Aspect 4 of the present disclosure is the video signal processing device according to Aspect 1 or 2, in which the processor adjusts the second parameter to emphasize sharpness in a first frequency band within a spatial frequency band occupied by the first video signal, and the first frequency band is on a high-frequency side of the spatial frequency band.

With this, the sharpness in a first frequency band on a high-frequency side of a spatial frequency band occupied by the first video signal in the second video signal is emphasized, and thus it is possible to efficiently emphasize the sharpness for the second video signal.

The video signal processing device according to Aspect 5 of the present disclosure is the video signal processing device according to Aspect 4, in which when the sharpness is emphasized, the processor adjusts the second parameter to shift the first frequency band to a higher-frequency side.

With this, the sharpness in a first frequency band on a higher-frequency side of a spatial frequency band occupied by the first video signal in the second video signal than for the broadcast video signal is emphasized, and thus, for a video signal with a low resolution such as a video signal with FHD resolution or a video signal with SD resolution, it is possible to efficiently emphasize the sharpness for the second video signal to obtain the definition feeling and the sharpness feeling more close to those of the video signal with the high resolution such as a video signal with 4K resolution.

The video signal processing device according to Aspect 6 of the present disclosure is the video signal processing device according to Aspect 4, in which when the sharpness is emphasized, the processor adjusts the second parameter to increase a sharpness gain.

With this, the sharpness is emphasized by increasing the sharpness gain, and thus it is possible to efficiently emphasize the sharpness for the second video signal.

The video signal processing device according to Aspect 7 of the present disclosure is the video signal processing device according to Aspect 4, in which when the sharpness is emphasized, the processor adjusts the second parameter to shift the first frequency band to a higher-frequency side and increase a sharpness gain.

With this, the sharpness is emphasized by narrowing the bandwidth of the first frequency band on a high-frequency side of a spatial frequency band occupied by the first video signal in the second video signal and by increasing the sharpness gain, and thus it is possible to efficiently emphasize the sharpness for the second video signal.

A video signal processing method according to Aspect 8 of the present disclosure includes: obtaining a first video signal through broadcast or through communication via a network; performing an up-scaling process of expanding the first video signal obtained, according to a first parameter which is set; and (i) when the first video signal is a broadcast video signal obtained through the broadcast and a resolution of the first video signal has changed, changing the first parameter according to the resolution changed; and (ii) when the first video signal is a communication video signal obtained through the communication, setting the first parameter to a fixed value.

With this, when the resolution of the broadcast video signal has changed, the first parameter of the up-scaling process is changed according to the resolution. The resolution of the broadcast video signal changes only when a program is switched, and thus the video signal processing device can perform the up-scaling process appropriate to a change in resolution in a manner that has little effect during the program.

Moreover, the video signal processing device sets the first parameter of the up-scaling process to a fixed value (i.e., does not change the first parameter) regardless of a change in resolution of the communication video signal. The resolution of the communication video signal may change even during a scene or a program, and thus the video signal processing device performs the constant up-scaling process regardless of a change in resolution, thereby preventing generation of a frame to which the process according to the up-scaling ratio is not applied when the resolution changes.

A program according to Aspect 9 of the present disclosure is a program for causing a computer to execute the video signal processing method according to Aspect 8.

It is to be noted that general or specific aspects of the present disclosure may be implemented by a system, an integrated circuit, a computer program, or a computer-readable non-transitory recording medium such as a CD-ROM, or may be implemented by any combination of systems, integrated circuits, computer programs, and non-transitory recording media.

Hereinafter, detailed description of embodiments will be given with reference to the drawings as appropriate. However, detailed description more than necessary may be omitted. For example, detailed description of well-known matter and redundant description of substantially identical constituent elements may be omitted. This is to avoid unnecessary redundancy of the following description and to facilitate understanding for persons skilled in the art.

It is to be noted that the accompanying drawings and the following description are provided to help persons skilled in the art to better understand the present disclosure, and do not intend to limit the subject matter of claims by these drawings and the description.

### [Embodiment]

The following describes an embodiment with reference to FIG. 1 through FIG. 14C.

### [1. Configuration]

FIG. 1 is a diagram illustrating the appearance of a display apparatus according to the present embodiment.

Display apparatus 100 obtains a video signal and displays a video represented by the obtained video signal. The video signal is, for example, a communication video signal, a broadcast video signal, etc. Display apparatus 100 has an appearance of a common flat-panel display that stores, in the housing, a display device including a display panel. Display apparatus 100 is, for example, a liquid-crystal display, an organic EL display, etc.

It is to be noted that display apparatus 100 is an example of the video signal processing device.

FIG. 2 is a block diagram illustrating an example of the hardware configuration of the display apparatus according to the present embodiment.

As shown in FIG. 2, display apparatus 100 includes tuner 101, communication interface (IF) 102, decoder 103, High-Definition Multimedia Interface (HDMI) (registered trademark) circuit 104, memory 105, control circuit 106, and display device 107.

Tuner 101 converts an analog signal of the broadcast wave received by an antenna not shown into a coded signal that is a digital signal (the coded signal of the video signal), and outputs the resulting coded signal to decoder 103.

Communication IF 102 is a communication interface that is communicably connected to a network such as the Internet and communicates with a server via the network. Communication IF 102 obtains the coded signal of the video signal from the server. Communication IF 102 may be, for example, an interface for wireless communication such as a wireless LAN interface or a Bluetooth (registered trademark) interface. Communication IF 102 may be an interface for wired communication such as a universal serial bus (USB) or a wired LAN interface.

Decoder 103 decodes the coded signal obtained from tuner 101 or communication IF 102, and outputs the resulting video signal (the first video signal) to control circuit 106. When the coded signal is multiplexed, decoder 103 may decode the coded video signal and the coded audio signal obtained by demultiplexing the coded signal to a video signal and an audio signal, respectively.

HDMI circuit 104 is an interface that obtains the video signal (the first video signal) outputted by an external apparatus connected to HDMI circuit 104. HDMI circuit 104 may obtain an audio signal outputted by the external apparatus, together with the video signal.

It is to be noted that, although decoder 103 and HDMI circuit 104 may obtain the audio signal as described above, the following describes a process only for a video signal.

Here, the combination of tuner 101, communication IF 102, and decoder 103 is an example of the obtainer. Moreover, HDMI circuit 104 may be an example of the obtainer. In other words, the combination of tuner 101 and decoder 103 obtains the first video signal through broadcast. The combination of communication IF 102 and decoder 103 obtains the first video signal through communication via the network.

Control circuit 106 performs a video signal process on the first video signal outputted by decoder 103 or HDMI circuit 104. The first video signal is a video signal obtained by display apparatus 100. The first video signal includes a video signal obtained via tuner 101, a video signal obtained via communication IF 102, and a video signal obtained via HDMI circuit 104.

Control circuit 106 outputs the video signal obtained by performing the video signal process on the first video signal to display device 107. It is to be noted that decoder 103 and control circuit 106 may be implemented by a single circuit. Control circuit 106 may be implemented by a general-purpose processor such as a CPU that executes a predetermined program, or by a dedicated circuit. In other words, the function of display apparatus 100 described later may be implemented by software, or by hardware.

Memory 105 may store a control program. Memory 105 also may store a display resolution based on display device 107 or a display resolution specified by an application. Memory 105 also may store various parameters for use in the video signal process executed by control circuit 106. The parameters are described later. Memory 105 includes, for example, a non-volatile memory and a volatile memory. Memory 105 also includes a frame memory (a frame buffer) described later. The frame memory is a volatile memory (e.g., a random access memory (RAM)).

Display device 107 displays a video based on the video signal outputted by control circuit 106. Display device 107 is a display panel, and includes, for example, a liquid-crystal panel or an organic EL panel.

FIG. 3 is a block diagram illustrating an example of the configuration of the control circuit according to the present embodiment.

As shown in FIG. 3, control circuit 106 includes expander 111, sharpness adjuster 112, central processing unit (CPU) 113.

Expander 111 performs an up-scaling process for expanding the obtained first video signal, according to the first parameter stored (set) in memory 105. Expander 111 expands the first video signal by converting the resolution of the first video signal to a higher resolution than the original resolution, to generate the second video signal whose resolution is higher than that of the first video signal.

The up-scaling process includes, for example, a mapping process and an interpolation process. The first parameter includes a parameter for use in the up-scaling process. For example, the first parameter may include a parameter for use in the mapping process, or a parameter for use in the interpolation process. It is to be noted that the first parameter does not include the up-scaling ratio of the up-scaling process for expanding the first video signal.

The mapping process is a process of mapping (arranging) the first pixels constituting the video of the first video signal on a frame with the display resolution. The frame generated by the mapping process includes mapped pixels on which the first pixels are mapped and non-mapped pixels on which the first pixels are not mapped. The frame is formed on a frame memory included in memory 105.

The interpolation process is a process of generating, in the frame generated by the mapping process, the pixel values of the non-mapped pixels using the first pixel values. In other words, the interpolation process is a process of calculating, for a target non-mapped pixel with no pixel value, the pixel value of the target pixel using the first pixel values of first pixels surrounding the target pixel. For example, the interpolation process may be performed using an interpolation filter with a filter coefficient set. The filter coefficient set is a parameter for use in the interpolation process, and is an example of the first parameter. Moreover, the memory size of the frame memory is a parameter for use in the interpolation process, and is an example of the first parameter.

The mapping process and the interpolation process are generally performed in a flow of one up-scaling process. The filter coefficient set of the interpolation filter is preloaded into memory 105 for one frame. Expander 111 calculates the pixel values of the target pixels using the first pixels and the filter coefficient set on memory 105. When the filter coefficient set of the interpolation filtering process is switched, it takes a time of several frames to reload a filter coefficient set.

Expander 111 generates a second video signal by performing both the mapping process and the interpolation process as the up-scaling process for the first video signal in the case where the broadcast video signal is inputted. In the up-scaling process of the broadcast video signal, a frame memory according to the up-scaling ratio is applied.

Expander 111 generates the second video signal by performing the mapping process and the interpolation process as the up-scaling process for the first video signal in the case where the communication video signal is inputted. In the up-scaling process of the communication video signal, a frame memory according to the display resolution is applied regardless of the resolution of the communication video signal.

As described above, the up-scaling process of the broadcast video signal employs a variable-size frame memory, and the up-scaling process of the communication video signal employs a fixed-size frame memory. The variable-size frame memory is applied to give priority to efficient use of the memory. The fixed-size frame memory is applied to give priority to seamless display. In other words, the efficient use of the memory and the seamless display are in a traded-off relationship.

When the first video signal whose resolution is lower than the display resolution is inputted, the up-scaling process is performed, thereby generating the second video signal in which the resolution of the inputted first video signal is increased to the display resolution.

Sharpness adjuster 112 performs sharpness adjustment on the second video signal obtained by performing the up-scaling process on the first video signal in expander 111, according to the second parameter stored (set) in memory 105. The sharpness adjustment process is implemented by adding, to the second video signal, a high-frequency component of the second video signal extracted using a sharpness filter. The high-frequency component extracted using a sharpness filter is a high-frequency component of the second video signal and also a high-frequency component in the spatial frequency band included in the first video signal. The sharpness gain can be changed by changing the gain of the extracted high-frequency component of the second video signal and adding the resultant component to the second video signal. The sharpness adjustment may be performed using a sharpness filter specified by a cut-off frequency, a frequency band, and a gain. The cut-off frequency, the frequency band, and the gain are included in the second parameter as an example.

It is to be noted that sharpness adjuster 112 may be implemented using a neural network. In this case, a weight or a bias value in the learning model of the neural network is included in the second parameter as an example. The weight or the bias value is determined by learning in the neural network. Alternatively, sharpness adjuster 112 includes the first configuration according to the present embodiment and the second configuration implemented using a neural network, and may be configured to output the mixture of these outputs. In this case, the weight or the bias value in the learning model of the neural network and the mixing ratio of the first configuration and the second configuration are included in the second parameter as an example.

CPU 113 detects the resolution of the obtained first video signal. CPU 113 determines whether the obtained first video signal is the broadcast video signal or the communication video signal. CPU 113 sets the first parameter for the up-scaling process in expander 111 and the second parameter for the sharpness adjustment in sharpness adjuster 112 according to the detected resolution of the first video signal and whether the first video signal is the broadcast video signal or the communication video signal. In other words, CPU 113 sets parameters including the first parameter and the second parameter stored in memory 105, according to the resolution of the first video signal and the source of the first video signal.

Specifically, when the first video signal is the broadcast video signal and the resolution of the first video signal has changed, CPU 113 changes the first parameter for use in the up-scaling process according to the changed resolution. When the first video signal is the communication video signal, CPU 113 sets the first parameter for use in the up-scaling process to a fixed value.

FIG. 4A through FIG. 4C are each a diagram for explaining an up-scaling process for a broadcast video signal. FIG. 4A is a diagram for explaining the up-scaling process for a video signal with 4K resolution. FIG. 4B is a diagram for explaining the up-scaling process for a video signal with FHD resolution. FIG. 4C is a diagram for explaining the up-scaling process for a video signal with SD resolution. FIG. 4A through FIG. 4C are each a diagram illustrating a relation between the signal level and the spatial frequency band occupied by the first video signal in the second video signal to be processed. It is to be noted that, in FIG. 4A through FIG. 4C, the shaded region of the video signal band indicates a frequency band included in the first video signal in the second video signal. In the case of 4K signal -> 4K signal where the signal is not expanded, the frequency band included in the first video signal in the second video signal is the same. However, for example, in the case of FHD signal -> 4K signal where the signal is expanded, the spatial frequency band occupied by the first video signal in the second video signal is approximately halved. The bold solid line indicates the frequency characteristics of the interpolation filter.

As shown in FIG. 4A through FIG. 4C, the spatial frequency band occupied by the first video signal varies depending on the resolution of the first video signal. Specifically, the spatial frequency band occupied by the first video signal becomes narrower as the resolution decreases, and thus the maximum frequency decreases. When the first video signal is a broadcast video signal, the timing of the change in resolution is the timing of switching the program, and thus CPU 113 sets the filter coefficient set of the interpolation filter to the filter coefficient set according to the resolution. Accordingly, expander 111 performs the up-scaling process using the interpolation filter according to the resolution. It is to be noted that the filter characteristics of the interpolation filter are set so that the signal level is constant in a low-frequency band and relatively higher in a high-frequency band than in the low-frequency band. In the high-frequency band, the filter characteristics of the interpolation filter are set so that the signal level: increases with an increase in frequency until the cut-off frequency; peaks at the cut-off frequency; and decreases with an increase in frequency after the cut-off frequency.

For example, as shown in FIG. 4A, for the broadcast video signal with 4K resolution, expander 111 performs the up-scaling process using the interpolation filter according to 4K resolution (4K filter). This up-scaling process is an up-scaling process from 4K resolution to 4K resolution, and thus the resolution of the video is not expanded. However, according to the filter characteristics of the interpolation filter, the signal level is relatively amplified on the high-frequency side of the video signal. It is to be noted that 4K resolution is an example of the display resolution (a high resolution), and this up-scaling process is performed when a video signal whose resolution is the same as the display resolution is obtained.

Moreover, for example, as shown in FIG. 4B, for the broadcast video signal with FHD resolution, expander 111 performs the up-scaling process using the interpolation filter according to FHD resolution (FHD filter). This up-scaling process is an up-scaling process from FHD resolution to 4K resolution, and thus the resolution of the video is expanded. At the same time, the signal level is relatively amplified on the high-frequency side of the video signal. It is to be noted that FHD resolution is an example of a first resolution lower than the display resolution (a low resolution), and this up-scaling process is performed when a video signal with the first resolution is obtained.

Moreover, for example, as shown in FIG. 4C, for the broadcast video signal with SD resolution, expander 111 performs the up-scaling process using the interpolation filter according to SD resolution (SD filter). This up-scaling process is an up-scaling process from SD resolution to 4K resolution, and thus the resolution of the video is expanded. At the same time, the signal level is relatively amplified on the high-frequency side of the video signal. It is to be noted that SD resolution is an example of a second resolution lower than the first resolution (a low resolution), and this up-scaling process is performed when a video signal with the second resolution is obtained.

The characteristics of each interpolation filter are determined by filter coefficient values and the algorithm of expander 111. More specifically, the characteristics of the interpolation filter are determined so that the signal level is raised on the high-frequency side in accordance with the maximum frequency in the spatial frequency band occupied by the first video signal. The characteristics of the interpolation filter are appropriately set according to the up-scaling ratio, thereby allowing for the enhanced definition feeling or sharpness feeling for a video. As described above, expander 111 performs the up-scaling process using the interpolation filter for improving the signal level on the high-frequency side of the spatial frequency band occupied by the first video signal, and thus it is possible to efficiently increase the resolution of the video when a broadcast video signal whose resolution is lower than the display resolution is inputted.

FIG. 4D through FIG. 4E are each a diagram for explaining an up-scaling process for a communication video signal. FIG. 4D is a diagram for explaining the up-scaling process for a video signal with FHD resolution. FIG. 4E is a diagram for explaining the up-scaling process for a video signal with SD resolution. FIG. 4D and FIG. 4E are each a diagram illustrating a relation between the signal level and the spatial frequency band occupied by the first video signal to be processed. It is to be noted that the up-scaling process for the communication video signal with 4K resolution is not shown since the up-scaling process for the communication video signal with 4K resolution is the same as the up-scaling process for the broadcast video signal with 4K resolution in FIG. 4A. It is to be noted that the filter characteristics of the interpolation filter are set so that the signal level is constant in a low-frequency band and relatively higher in a high-frequency band than in the low-frequency band. In the high-frequency band, the filter characteristics of the interpolation filter are set so that the signal level: increases with an increase in frequency until the cut-off frequency; peaks at the cut-off frequency; and decreases with an increase in frequency after the cut-off frequency.

As described above, the spatial frequency band included in the first video signal varies depending on the resolution of the first video signal. Specifically, the spatial frequency band included in the first video signal becomes narrower as the resolution decreases, and thus the maximum frequency decreases. When the first video signal is a communication video signal, the resolution may change even in the middle of a scene or program. The seamless display is required. Accordingly, expander 111 performs the up-scaling process using the interpolation filter whose filter coefficient set is fixed for 4K resolution even when the resolution changes. As described above, the constant up-scaling process is performed regardless of a change in resolution, and thus it is possible to prevent generating a frame to which the process according to the up-scaling ratio is not applied when the resolution changes. The frame to which the process according to the up-scaling ratio is not applied is generated since, in the case where the resolution changes and the up-scaling ratio also changes, it takes a time of several frames to switch the interpolation filter when the up-scaling process according to the changed up-scaling ratio is performed, thus the interpolation filter switching a few flames later. Generation of the frame to which the process according to the up-scaling ratio is not applied leads to display of a video that gives a feeling of strangeness.

Moreover, in the case where the second video signal is a video signal obtained by performing the up-scaling process on a communication video signal, CPU 113 adjusts the second parameter to more emphasize the sharpness than the case where the second video signal is a video signal obtained by performing the up-scaling process on a broadcast video signal. Moreover, in the case where the second video signal is a video signal obtained by performing the up-scaling process on a communication video signal, CPU 113 adjusts the second parameter to more emphasize the sharpness than the case where the second video signal is a video signal obtained by performing the up-scaling process on a broadcast video signal. In other words, the process for adjusting the second parameter is performed with reference to the case where the up-scaling ratio of the up-scaling process performed on the broadcast video signal is the same as the up-scaling ratio of the up-scaling process performed on the communication video signal. In this embodiment, the resolution is expanded to the resolution common to the up-scaling process for the communication video signal and the up-scaling process for the broadcast video signal (display resolution), and thus when the resolution of the inputted first video signal is the same, the up-scaling ratio of the up-scaling process for the broadcast video signal is the same as the up-scaling ratio of the up-scaling process for the communication video signal. In the case of the broadcast video signal, the sharpness is also emphasized by the interpolation process using the interpolation filter according to the up-scaling ratio, whereas in the case of the communication video signal, the sharpness emphasis is insufficient in comparison with the broadcast video signal since the interpolation process is performed using the fixed interpolation filter. The adjustment of the second parameter as described above can complement the insufficient sharpness emphasis in the case of the communication video signal.

Furthermore, CPU 113 may adjust the second parameter to more emphasize the sharpness as the resolution decreases. For example, CPU 113 may adjust the second parameter to emphasize the sharpness in the first frequency band within the spatial frequency band occupied by the first video signal. It is to be noted that the first frequency band that is a target frequency band for which the sharpness is to be emphasized is on the high-frequency side of the spatial frequency band. For example, the high-frequency side of the spatial frequency band means a frequency band whose upper-limit value (upper-limit frequency) is the maximum frequency of the spatial frequency band included in the first video signal, and whose lower-limit value (lower-limit frequency) is a frequency higher than or equal to a median of the spatial frequency band included in the first video signal. When the sharpness is emphasized, CPU 113 may adjust the second parameter to shift the first frequency band to a higher frequency region (a higher-frequency side). Specifically, CPU 113 may shift the first frequency band to the higher-frequency side by setting the lower-limit frequency to a higher value without changing the upper-limit frequency of the first frequency band. When the sharpness is emphasized, CPU 113 also may adjust the second parameter to increase the sharpness gain.

FIG. 5A through FIG. 5C are each a diagram for explaining the first example of the sharpness adjustment for a broadcast video signal. FIG. 5A is a diagram for explaining the first example of the sharpness adjustment for a video signal with 4K resolution. FIG. 5B is a diagram for explaining the first example of the sharpness adjustment for a video signal with FHD resolution. FIG. 5C is a diagram for explaining the first example of the sharpness adjustment for a video signal with SD resolution. FIG. 5A through FIG. 5C are each a diagram illustrating a relation between the signal level and the spatial frequency band occupied by the first video signal to be processed.

As described above regarding the relation between the spatial frequency and the resolution of the first video signal, the spatial frequency band occupied by the first video signal varies depending on the resolution of the first video signal. Specifically, the spatial frequency band occupied by the first video signal becomes narrower as the resolution decreases, and thus the maximum frequency decreases. CPU 113 sets the second parameter to emphasize the sharpness in the first frequency band that is on a high-frequency side of the spatial frequency band occupied by the first video signal. Specifically, CPU 113 determines the cut-off frequency of the sharpness adjustment filter so that the first frequency band is set as a target of the sharpness adjustment. CPU 113 determines a gain to adjust the strength of the sharpness emphasis.

CPU 113 determines the cut-off frequency according to the resolution of the first video signal. For example, CPU 113 determines a frequency band on the high-frequency side of the spatial frequency band occupied by the first video signal as the first frequency band being a target of the sharpness adjustment, and may determine the cut-off frequency based on the determined first frequency band. In this manner, an edge-correction-band sharpness filter for adjusting the sharpness is determined. Moreover, a band-pass filter on the higher-frequency side may be selected from among band-pass filters each having a different cut-off frequency. Moreover, instead of the band-pass filter, a low-pass filter or a high-pass filter may be used. The cut-off frequency may be determined to be the central frequency of the first frequency band or a frequency other than the central frequency of the first frequency band. CPU 113 also may determine the gain to be a constant value regardless of the resolution of the first video signal.

For this reason, sharpness adjuster 112 performs sharpness adjustment according to the resolution. For example, as shown in FIG. 5A, using an edge-correction-band sharpness filter (4K sharpness filter) according to the resolution (in this case, 4K resolution) of the obtained first video signal, sharpness adjuster 112 performs the sharpness adjustment on the second video signal with 4K resolution obtained by performing the up-scaling process on the obtained broadcast video signal with 4K resolution (the first video signal). Moreover, for example, as shown in FIG. 5B, using an edge-correction-band sharpness filter (FHD sharpness filter) according to the resolution (in this case, FHD resolution) of the obtained first video signal, sharpness adjuster 112 performs the sharpness adjustment on the second video signal with 4K resolution obtained by performing the up-scaling process on the obtained broadcast video signal with FHD resolution (the first video signal). Moreover, for example, as shown in FIG. 5C, using an edge-correction-band sharpness filter (SD sharpness filter) according to the resolution (in this case, SD resolution) of the obtained first video signal, sharpness adjuster 112 performs the sharpness adjustment on the second video signal with 4K resolution obtained by performing the up-scaling process on the obtained broadcast video signal with SD resolution (the first video signal). As described above, sharpness adjuster 112 performs the sharpness adjustment using a sharpness filter that increases the signal level in the spatial frequency band occupied by the first video signal. Accordingly, when a broadcast video signal whose resolution is lower than the display resolution is inputted, it is possible to efficiently achieve the improvement of the picture quality of the video.

FIG. 5D through FIG. 5F are each a diagram for explaining the sharpness adjustment for a communication video signal. FIG. 5D is a diagram for explaining the sharpness adjustment for a video signal with 4K resolution. FIG. 5E is a diagram for explaining the sharpness adjustment for a video signal with FHD resolution. FIG. 5F is a diagram for explaining the sharpness adjustment for a video signal with SD resolution. FIG. 5D through FIG. 5F are each a diagram illustrating a relation between the signal level and the spatial frequency band occupied by the first video signal to be processed.

As described above, the spatial frequency band occupied by the first video signal varies depending on the resolution of the first video signal. Specifically, the spatial frequency band occupied by the first video signal becomes narrower as the resolution decreases, and thus the maximum frequency decreases. CPU 113 sets the second parameter to emphasize the sharpness in the first frequency band that is on a high-frequency side of the spatial frequency band occupied by the first video signal. Moreover, in the case where the second video signal is a video signal obtained by performing the up-scaling process on a communication video signal, CPU 113 adjusts the second parameter to more emphasize the sharpness than the case where the second video signal is a video signal obtained by performing the up-scaling process on a broadcast video signal. Specifically, CPU 113 determines the cut-off frequency of the sharpness adjustment filter so that the first frequency band becomes a target of the sharpness adjustment. The sharpness adjustment filter described here is a so-called band-pass filter, which can extract a video signal component in a predetermined frequency band. The cut-off frequency means a central frequency of the predetermined frequency band, and the first frequency band means the predetermined frequency band. In this example, the sharpness adjustment filter is composed of a single band-pass filter, but may be composed of multiple band-pass filters each having a different cut-off frequency and a different frequency band. CPU 113 determines a gain to adjust the strength of the sharpness emphasis. CPU 113 determines the gain to be greater for the communication video signal than for the broadcast video signal.

As with the case of the broadcast video signal, CPU 113 determines the cut-off frequency according to the resolution of the first video signal. CPU 113 also may determine the gain to be a constant value regardless of the resolution of the first video signal.

For this reason, sharpness adjuster 112 performs sharpness adjustment according to the resolution. For example, as shown in FIG. 5D, sharpness adjuster 112 performs the sharpness adjustment on the communication video signal with 4K resolution using a sharpness filter according to 4K resolution (4K sharpness filter). In this sharpness adjustment, a gain is set to be greater than the gain in the sharpness adjustment for the broadcast video signal with 4K resolution shown in FIG. 5A. Moreover, in this sharpness adjustment, the first frequency band is set so that lower-limit frequency F11 of the 4K sharpness filter shown in FIG. 5D is higher than lower-limit frequency F1 of the 4K sharpness filter shown in FIG. 5A. In this manner, the first frequency band of the 4K sharpness filter shown in FIG. 5D is set to be in a higher frequency region than the first frequency band of the 4K sharpness filter shown in FIG. 5A.

Moreover, for example, as shown in FIG. 5E, sharpness adjuster 112 performs the sharpness adjustment on the communication video signal with FHD resolution using a sharpness filter according to FHD resolution (FHD sharpness filter). In this sharpness adjustment, a cut-off frequency of the sharpness filter and a gain are set to be higher and greater than the cut-off frequency and the gain in the sharpness adjustment for the broadcast video signal with FHD resolution shown in FIG. 5B, respectively. Moreover, in this sharpness adjustment, the first frequency band is set so that lower-limit frequency F12 of the FHD sharpness filter shown in FIG. 5E is higher than lower-limit frequency F2 of the FHD sharpness filter shown in FIG. 5B. In this manner, the first frequency band of the FHD sharpness filter shown in FIG. 5E is set to be in a higher frequency region than the first frequency band of the FHD sharpness filter shown in FIG. 5B.

Moreover, for example, as shown in FIG. 5F, sharpness adjuster 112 performs the sharpness adjustment on the communication video signal with SD resolution using a sharpness filter according to SD resolution (SD sharpness filter). In this sharpness adjustment, a cut-off frequency of the sharpness filter and a gain are set to be higher and greater than the cut-off frequency and the gain in the sharpness adjustment for the broadcast video signal with SD resolution shown in FIG. 5C respectively. Moreover, in this sharpness adjustment, the first frequency band is set so that lower-limit frequency F13 of the SD sharpness filter shown in FIG. 5F is higher than lower-limit frequency F3 of the SD sharpness filter shown in FIG. 5C. In this manner, the first frequency band of the SD sharpness filter shown in FIG. 5F is set to be in a higher frequency region than the first frequency band of the SD sharpness filter shown in FIG. 5C.

In the setting control of these cut-off frequencies and gains, multiple band-pass filters each having a different cut-off frequency are employed, and it is allowed to set the gain of the video signal component extracted by each band-pass filter. Accordingly, a higher cut-off frequency may be selected to increase the gain. This setting control is sufficient as long as the sharpness is emphasized in a higher frequency region in comparison with the broadcast video signal.

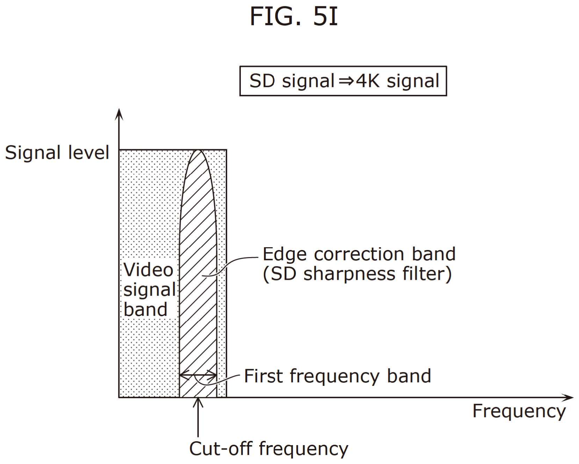

FIG. 5G through FIG. 5I are each a diagram for explaining the second example of the sharpness adjustment for a broadcast video signal. FIG. 5G is a diagram for explaining the second example of the sharpness adjustment for a video signal with 4K resolution. FIG. 5H is a diagram for explaining the second example of the sharpness adjustment for a video signal with FHD resolution. FIG. 5I is a diagram for explaining the second example of the sharpness adjustment for a video signal with SD resolution. FIG. 5G through FIG. 5I are each a diagram illustrating a relation between the signal level and the spatial frequency band occupied by the first video signal to be processed.

As shown in FIG. 5G, sharpness adjuster 112 performs the sharpness adjustment on the broadcast video signal with 4K resolution using a 4K sharpness filter obtained by disposing the 4K sharpness filter shown in FIG. 5D on the lower-frequency side. In other words, the 4K sharpness filter shown in FIG. 5D is obtained by shifting the 4K sharpness filter shown in FIG. 5G to the higher-frequency side. The cut-off frequency of the 4K sharpness filter shown in FIG. 5D is higher than the cut-off frequency of the 4K sharpness filter shown in FIG. 5G. The width of the first frequency band of the 4K sharpness filter shown in FIG. 5D is the same as the width of the first frequency band of the 4K sharpness filter shown in FIG. 5G.

Moreover, as shown in FIG. 5H, sharpness adjuster 112 performs the sharpness adjustment on the broadcast video signal with FHD resolution using a FHD sharpness filter obtained by disposing the FHD sharpness filter shown in FIG. 5E on the lower-frequency side. In other words, the FHD sharpness filter shown in FIG. 5E is obtained by shifting the FHD sharpness filter shown in FIG. 5H to the higher-frequency side. The cut-off frequency of the FHD sharpness filter shown in FIG. 5E is higher than the cut-off frequency of the FHD sharpness filter shown in FIG. 5H. The width of the first frequency band of the FHD sharpness filter shown in FIG. 5E is the same as the width of the first frequency band of the FHD sharpness filter shown in FIG. 5H.

Moreover, as shown in FIG. 5I, sharpness adjuster 112 performs the sharpness adjustment on the broadcast video signal with SD resolution using a SD sharpness filter obtained by disposing the SD sharpness filter shown in FIG. 5F on the lower-frequency side. In other words, the SD sharpness filter shown in FIG. 5F is obtained by shifting the SD sharpness filter shown in FIG. 5I to the higher-frequency side. The cut-off frequency of the SD sharpness filter shown in FIG. 5F is higher than the cut-off frequency of the SD sharpness filter shown in FIG. 5I. The width of the first frequency band of the SD sharpness filter shown in FIG. 5F is the same as the width of the first frequency band of the SD sharpness filter shown in FIG. 5I.

When the sharpness adjustment in the second example is performed on the broadcast video signal as described above, the second parameter for the sharpness adjustment for the communication video signal is adjusted so that (i) the width of the frequency band applying to the sharpness filter of the sharpness adjustment for the communication video signal is the same as the width of the frequency band applying to the sharpness filter of the sharpness adjustment for the broadcast video signal and (ii) the frequency band applying to the sharpness filter of the sharpness adjustment for the communication video signal is shifted to a higher frequency region (a higher-frequency side) than the frequency band applying to the sharpness filter of the sharpness adjustment for the broadcast video signal.

As described above, in comparison with the case where a broadcast video signal whose resolution is lower than the display resolution is inputted, in the case where a communication video signal whose resolution is lower than the display resolution is inputted, sharpness adjuster 112 performs the sharpness adjustment with a greater gain using a sharpness filter that increases the signal level on the higher-frequency side of the spatial frequency band occupied by the first video signal. Accordingly, when the communication video signal whose resolution is lower than the display resolution is inputted, it is possible to efficiently enhance the definition and sharpness of a video and achieve the improvement of the picture quality. For example, for a video signal with a low resolution such as a video signal with FHD resolution or a video signal with SD resolution, it is possible to make an edge correction to be more close to the characteristics of a video signal with a high resolution such as a video signal with 4K resolution, and the sharpness for the second video signal can be efficiently emphasized to obtain the definition feeling and the sharpness feeling more close to those of the video signal with the high resolution.

It is to be noted that, regardless of whether to be the broadcast video signal or communication video signal, CPU 113 may determine the gain to more emphasize the sharpness as the resolution decreases. In other words, CPU 113 may determine the gain to increase the gain of the sharpness adjustment as the resolution decreases. Even in this case, in the case where the second video signal is a video signal obtained by performing the up-scaling process on a communication video signal, CPU 113 may extract a higher frequency component than the case where the second video signal is a video signal obtained by performing the up-scaling process on a broadcast video signal, and determine the cut-off frequency, the frequency band, and the gain for the sharpness filter of the sharpness adjustment to more increase the gain.

Moreover, in the case where the second video signal is a video signal obtained by performing the up-scaling process on a broadcast video signal, CPU 113 sets, according to the resolution of the first video signal, the filter coefficient set of the interpolation filter to a filter coefficient set according to the resolution when the resolution changes, but the present disclosure is not limited to this. The filter coefficient set of the interpolation filter does not need to be set to a filter coefficient set according to the resolution. CPU 113 may set the filter coefficient set of the interpolation filter to the same filter coefficient set as the case where the second video signal is a video signal obtained by performing the up-scaling process on a communication video signal.

Moreover, in the case where the second video signal is a video signal obtained by performing the up-scaling process on a communication video signal, CPU 113 determines the second parameter to more emphasize the sharpness than the case where the second video signal is a video signal obtained by performing the up-scaling process on a broadcast video signal, but the present disclosure is not limited to this. CPU 113 may set the same cut-off frequency of the sharpness filter, the same frequency band of the sharpness filter, or the same gain between the case where the second video signal is a video signal obtained by performing the up-scaling process on a communication video signal and the case where the second video signal is a video signal obtained by performing the up-scaling process on a broadcast video signal, or may determine the second parameter to perform the sharpness adjustment such that any of the cut-off frequency, the frequency band, and the gain are the same between them.

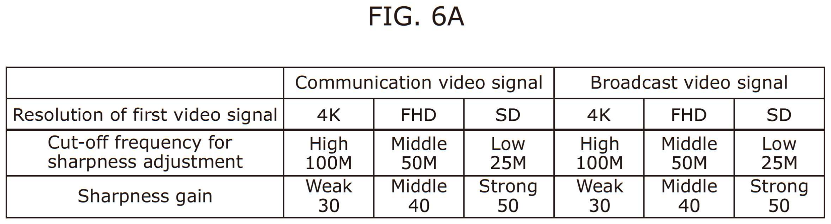

The second parameter may be stored in memory 105 in the forms shown in FIG. 6A through FIG. 6B. FIG. 6A is a table illustrating basic information on the second parameter. FIG. 6B is a table illustrating a difference between the second parameter for a communication video signal and the second parameter for a broadcast video signal.

As shown in FIG. 6A, for each of a communication video signal and a broadcast video signal, the sharpness gain and the cut-off frequency for sharpness adjustment are defined as the second parameter according to the resolution of the first video signal. In FIG. 6A, the same value is set as the second parameter between the communication video signal and the broadcast video signal.

For the communication video signal, the second parameter is set to more emphasize the sharpness than for the broadcast video signal. For this reason, as shown in FIG. 6B, a difference is defined between the second parameter for the communication video signal and the second parameter for the broadcast video signal. The second parameter for the communication video signal is calculated by adding the difference shown in FIG. 6B to the second parameter of the basic information shown in FIG. 6A.

FIG. 6C is a table illustrating the second parameter after the difference is applied to the basic information. CPU 113 calculates the second parameter for the communication video signal as shown in FIG. 6C by adding the difference shown in FIG. 6B to the second parameter of the basic information shown in FIG. 6A. It is to be noted that, in FIG. 6C, nothing is added for the broadcast video signal, and thus the same values as FIG. 6A are determined as the second parameter.

### [2. Operation]

Next, the operation of display apparatus 100 is described.

FIG. 7 is a flowchart illustrating an example of an initial setting process by the display apparatus.

For example, the initial setting process is performed when display apparatus 100 is activated (turned on). It is to be noted that the initial setting process may be performed when the obtained first video signal is switched from a broadcast video signal to a communication video signal. Moreover, the initial setting process may be performed when the obtained first video signal is switched from a communication video signal to a broadcast video signal.

CPU 113 of control circuit 106 in display apparatus 100 detects the resolution of the first video signal (S1).

Next, CPU 113 mutes the video (S2) Specifically, instead of outputting a video signal based on the first video signal, CPU 113 may output a video signal or control signal for displaying a black screen to display device 107.

Next, CPU 113 sets an up-scaling ratio and a first parameter for a communication video signal (S3). The up-scaling ratio is set according to the detected resolution of the first video signal. The first parameter for the communication video signal is set to a fixed parameter. The set up-scaling ratio and the set first parameter are stored in memory 105. It is to be noted that, in Step S3, the first parameter for the communication video signal is set unconditionally, but when the obtained first video signal is a broadcast video signal, the first parameter for the broadcast video signal is set in Step S14 of the flowchart in FIG. 8 described later.

Next, CPU 113 unmutes the video (S4). Specifically, CPU 113 controls expander 111 and sharpness adjuster 112 to stop outputting the video signal or control signal for displaying the black screen to display device 107 and to output a video signal obtained by preforming a video signal process on the first video signal to display device 107.

FIG. 8 is a flowchart illustrating an example of a video signal process by the display apparatus.

Tuner 101, communication IF 102, or decoder 103 of display apparatus 100 obtains a first video signal (S11).

CPU 113 of control circuit 106 in display apparatus 100 determines whether the first video signal is a communication video signal (S12). In other words, CPU 113 determines whether the first video signal is the communication video signal or the broadcast video signal.

When the first video signal is determined to be a communication video signal (Yes in S12), CPU 113 performs Step S13, and when the first video signal is determined to be a broadcast video signal (No in S12), CPU 113 performs Step S14.

In Step S13, CPU 113 and expander 111 perform the up-scaling process for a communication video signal (S13). Here, Step S13 is described in detail with reference to FIG. 9.

FIG. 9 is a flowchart illustrating an example of the up-scaling process for a communication video signal.

CPU 113 detects the resolution of the first video signal (S21).

CPU 113 determines whether the resolution of the first video signal has changed (S22). When it is determined that the resolution of the first video signal has changed (Yes in S22), CPU 113 performs Step S23, and when it is determined that the resolution of the first video signal has not changed (No in S22), CPU 113 performs Step S24.

In Step S23, CPU 113 has detected that the resolution of the first video signal has changed, and thus changes the up-scaling ratio for expanding the resolution of the first video signal to the display resolution (S23). In doing so, CPU 113 sets the up-scaling ratio of the up-scaling process according to the resolution of the first video signal and the first video signal being a communication video signal.

In Step S24, expander 111 reads the first parameter for a communication video signal from memory 105, and performs the up-scaling process using the read first parameter (S24).

The description goes back to FIG. 8.

In Step S14, CPU 113 and expander 111 perform the up-scaling process for a broadcast video signal (S14). Here, Step S14 is described in detail with reference to FIG. 10.

FIG. 10 is a flowchart illustrating an example of the up-scaling process for a broadcast video signal.

CPU 113 detects the resolution of the first video signal (S31).

CPU 113 determines whether the resolution of the first video signal has changed (S32). When it is determined that the resolution of the first video signal has changed (Yes in S32), CPU 113 performs Step S33, and when it is determined that the resolution of the first video signal has not changed (No in S32), CPU 113 performs Step S34.

In Step S33, CPU 113 starts a resolution change process (S33). After the start of the resolution change process, the operation proceeds to next Step S34 without waiting the end of the resolution change process. The resolution change process is described in detail later with reference to FIG. 11.

In Step S34, expander 111 reads the first parameter for a broadcast video signal set in the resolution change process described later from memory 105, and performs the up-scaling process using the read first parameter (S34).

Next, the resolution change process that starts in Step S33 is described with reference to FIG. 11.

FIG. 11 is a flowchart illustrating an example of the resolution change process.

CPU 113 mutes the video (S41) Specifically, instead of outputting a video signal based on the first video signal, CPU 113 may output a video signal or control signal for displaying a black screen to display device 107.

Next, CPU 113 sets the up-scaling ratio and the first parameter (S42). In doing so, CPU 113 sets the first parameter for the up-scaling process according to the resolution of the first video signal and the first video signal being a broadcast video signal. A specific method of setting the first parameter is as described in the explanation of expander 111 and CPU 113. The set first parameter is stored in memory 105. It is to be noted that Step S34 may be performed at a time when Step S42 is not yet completed. In this case, the up-scaling process may be performed with an inappropriate first parameter. However, the video is being muted, and thus this is not visible to a user.

CPU 113 unmutes the video (S43). Specifically, CPU 113 controls expander 111 and sharpness adjuster 112 to stop outputting the video signal or control signal for displaying the black screen to display device 107 and to output a video signal obtained by preforming a video signal process on the first video signal to display device 107.

The description goes back to FIG. 8.

In Step S15, CPU 113 and sharpness adjuster 112 perform the sharpness adjustment (S15). Here, Step S15 is described in detail with reference to FIG. 12.

FIG. 12 is a flowchart illustrating an example of the sharpness adjustment.

CPU 113 detects the resolution of the first video signal (S51).

CPU 113 determines whether the resolution of the first video signal has changed (S52). When it is determined that the resolution of the first video signal has changed (Yes in S52), CPU 113 performs Step S53, and when it is determined that the resolution of the first video signal has not changed (No in S52), CPU 113 performs Step S54.

In Step S53, CPU 113 sets the second parameter for the sharpness adjustment (S53). Specifically, CPU 113 sets the second parameter for the sharpness adjustment in sharpness adjuster 112 according to the detected resolution of the first video signal and whether the second video signal is the broadcast video signal or the communication video signal. The set second parameter is stored in memory 105.

Sharpness adjuster 112 reads the set second parameter from memory 105, and performs the sharpness adjustment using the read second parameter (S54). In this manner, the adjusted video signal is outputted from control circuit 106 to display device 107.

The description goes back to FIG. 8.

In Step S16, display device 107 displays the video based on the adjusted video signal (S16).

### [3. Problems, Advantageous Effects, etc.]

FIG. 13A through FIG. 13C, FIG. 14A through FIG. 14C are each a diagram for explaining a problem arising in the up-scaling process. FIG. 13A through FIG. 13C are each a diagram for explaining the up-scaling process for a broadcast video signal. FIG. 13A illustrates an example of the case where the up-scaling process is performed on a video signal with SD resolution and 4K video is outputted, FIG. 13B illustrates an example of the case where the up-scaling process is performed on a video signal with FHD resolution and 4K video is outputted, and FIG. 13C illustrates an example of the case where the up-scaling process is performed on a video signal with 4K resolution and 4K video is outputted.

As shown in FIG. 13A and FIG. 13B, when the obtained first video signal is a broadcast video signal whose resolution is lower than the display resolution, the size of the frame memory in which the first video signal is temporarily stored is set according to the resolution. In other words, as shown in FIG. 13A, the frame memory size for the first video signal with SD resolution is set to one-sixth of the frame memory size for the second video signal with 4K resolution. Moreover, as shown in FIG. 13B, the frame memory size for the first video signal with FHD resolution is set to one-fourth of the frame memory size for the second video signal with 4K resolution. Moreover, as shown in FIG. 13C, the frame memory size for the first video signal with 4K resolution is set to be equal to the frame memory size for the second video signal with 4K resolution. It is to be noted that the display resolution is, for example, the maximum resolution (the resolution of display device 107) or the resolution specified by an application, and in the present embodiment, the display resolution is 4K resolution.

As described above, when the resolution of the first video signal has changed, mapping of the frame memory is changed. Accordingly, it takes a time of several frames until the changed mapping is applied, thus resulting in the generation of a frame to which the process according to the up-scaling ratio matched to the resolution is not applied. However, in the case of the broadcast video signal as described above, the timing of the change in resolution is the same as the timing of switching the program. For this reason, in the video signal processing device, the seamless video process is not required even when the process according to the up-scaling ratio is performed. For example, the video signal processing device turns off display of frames to which the process according to the up-scaling ratio is not applied (i.e., mutes the video), thereby performing the video signal process in a manner that has little effect on a program. In other words, when the first video signal is a broadcast video signal, it is possible to perform the up-scaling process according to the up-scaling ratio of the first video signal.

FIG. 14A through FIG. 14C are each a diagram for explaining the up-scaling process for a communication video signal. FIG. 14A illustrates an example of the case where the up-scaling process is performed on a video signal with SD resolution and 4K video is outputted, FIG. 14B illustrates an example of the case where the up-scaling process is performed on a video signal with FHD resolution and 4K video is outputted, and FIG. 14C illustrates an example of the case where the up-scaling process is performed on a video signal with 4K resolution and 4K video is outputted.

When the obtained first video signal is a communication video signal, a frame memory supporting the display resolution is used regardless of the resolution of the first video signal. The communication video signal is a video signal in which a frame with a resolution lower than the display resolution is embedded in a frame with the display resolution. In other words, in the communication video signal, even when the resolution of the first video signal is lower than the display resolution, one frame has the display resolution. When the resolution of the first video signal is lower than the display resolution, the frame memory includes a region with pixel values and a region with no pixel value. As described above, one frame of the communication video signal has the display resolution, and thus the frame memory of the size supporting the display resolution is uniformly used regardless of the resolution of the first video signal. For this reason, the frame memory size is not changed even when the resolution changes, and thus the seamless video process is possible. Display apparatus 100 (a video signal processing device) according to the present embodiment includes tuner 101, communication IF 102, decoder 103 (an obtainer), expander 111, and CPU 113 (a processor). Tuner 101, communication IF 102, and decoder 103 (the obtainer) obtains the first video signal through broadcast or through communication via the network. Expander 111 performs an up-scaling process of expanding the obtained first video signal, according to the set first parameter. CPU 113 (the processor): (i) when the first video signal is a broadcast video signal obtained through the broadcast and the resolution of the first video signal has changed, changes the first parameter according to the resolution changed; and (ii) when the first video signal is a communication video signal obtained through the communication, sets the first parameter to a fixed value.

With this, when the resolution of the broadcast video signal has changed, the first parameter of the up-scaling process is changed according to the resolution. The resolution of the broadcast video signal changes only when a program is switched, and thus display apparatus 100 (the video signal processing device) can perform the up-scaling process appropriate to a change in resolution in a manner that has little effect during the program.

Moreover, display apparatus 100 (the video signal processing device) sets the first parameter of the up-scaling process to a fixed value (i.e., does not change the first parameter) regardless of a change in resolution of the communication video signal. The resolution of the communication video signal may change even during a scene or a program, and thus display apparatus 100 (the video signal processing device) performs the constant up-scaling process regardless of a change in resolution, thereby preventing generation of a frame to which the process according to the up-scaling ratio is not applied when the resolution changes.

As described above, when the resolution of the obtained video signal changes, display apparatus 100 (the video signal processing device) can prevent reduction in picture quality.

Moreover, display apparatus 100 (the video signal processing device) according to the present embodiment further includes sharpness adjuster 112. Sharpness adjuster 112 performs sharpness adjustment on a second video signal obtained by performing the up-scaling process on the first video signal, according to a second parameter which is set. When the second video signal is a video signal obtained by performing the up-scaling process on the communication video signal, CPU 113 (the processor) adjusts the second parameter to more emphasize sharpness than when the second video signal is a video signal obtained by performing the up-scaling process on the broadcast video signal.

Thus, for the communication video signal, the second parameter of the sharpness adjustment is adjusted to more emphasize the sharpness than for the broadcast video signal. Accordingly, the up-scaling process is fixed regardless of the resolution, and thus it is possible to improve the picture quality when a video signal with a low resolution is inputted using the sharpness adjustment in which the second parameter is adjusted.

Moreover, in display apparatus 100 (the video signal processing device) according to the present embodiment, CPU 113 (the processor) adjusts the second parameter to more emphasize sharpness as the resolution decreases.

Thus, for the communication video signal, the second parameter is adjusted to more emphasize the sharpness than for the broadcast video signal and to more emphasize the sharpness as the resolution decreases. In other words, the sharpness adjustment according to the up-scaling ratio is performed for the communication video signal, and thus, even when the up-scaling process is fixed regardless of the resolution, it is possible to perform the video signal process appropriate to the resolution for the communication video signal. Accordingly, it is possible to reduce the difference in picture quality between before and after a change in resolution.

Moreover, in display apparatus 100 (the video signal processing device) according to the present embodiment, CPU 113 (the processor) adjusts the second parameter to emphasize sharpness in a first frequency band within a spatial frequency band occupied by the first video signal. The first frequency band is on a high-frequency side of the spatial frequency band. The high-frequency side of the spatial frequency band means a frequency band whose upper-limit value is the maximum frequency of the spatial frequency band occupied by the first video signal in the second video signal, and whose lower-limit value is a frequency higher than or equal to a median of the spatial frequency band occupied by the first video signal in the second video signal.

With this, the sharpness in a first frequency band on a high-frequency side of a spatial frequency band occupied by the first video signal in the second video signal is emphasized, and thus it is possible to efficiently emphasize the sharpness for the second video signal.

Moreover, in display apparatus 100 (the video signal processing device) according to the present embodiment, when the sharpness is emphasized, CPU 113 (the processor) adjusts the second parameter to shift the first frequency band to a higher-frequency side.

With this, the sharpness is emphasized by the sharpness filter extracting, as the first frequency band, a band on a higher-frequency side of a spatial frequency band occupied by the first video signal than for the broadcast video signal. Accordingly, for a video signal with a low resolution such as a video signal with FHD resolution or a video signal with SD resolution, it is possible to efficiently emphasize the sharpness for the second video signal to obtain the definition feeling and the sharpness feeling more close to those of the video signal with the high resolution such as a video signal with 4K resolution.

Moreover, in display apparatus 100 (the video signal processing device) according to the present embodiment, when the sharpness is emphasized, CPU 113 (the processor) adjusts the second parameter to increase a sharpness gain.

With this, the sharpness is emphasized by increasing the sharpness gain, and thus it is possible to efficiently emphasize the sharpness for the second video signal.

Moreover, in display apparatus 100 (the video signal processing device) according to the present embodiment, when the sharpness is emphasized, CPU 113 (the processor) performs two processes of: adjusting the second parameter to shift the first frequency band to a higher-frequency side; and adjusting the second parameter to increase a sharpness gain. Accordingly, it is possible to efficiently emphasize the sharpness for the second video signal.

### [4. Variations]

In the foregoing embodiment, when the sharpness is emphasized by CPU 113, the following two processes are performed as an example: the process of adjusting the second parameter to shift the first frequency band to a high-frequency region; and the process of adjusting the second parameter to increase the sharpness gain. However, the sharpness may be emphasized by performing only one of the two processes.

As described above, an embodiment of the present disclosure has been described by way of example of the technique disclosed in the present application. Attached drawings and detailed descriptions are provided to describe the embodiment.

Accordingly, the constituent elements illustrated in the attached drawings and described in the detailed descriptions may include not only essential constituent elements necessary to solve the problems, but also constituent elements that are not essential to solve the problem, in order to illustrate the above-described implementations. Therefore, such unessential constituent elements illustrated in the attached drawings and described in the detailed descriptions should not immediately be regarded as essential constituent elements.

The above-described embodiment is merely illustrative example of the technique according to the present disclosure, and therefore, various modifications, replacement, addition, and omission are possible within the scope of claims or within the equivalent region of the claims.

### [Industrial Applicability]

The present disclosure is effective for use as a video processing device, a video processing method, a video generation device, a video generation method, and a program that are capable of reducing the amplification of noise caused by increasing the sharpness gain.

### [Reference Signs List]

- 100: display apparatus
- 101: tuner
- 102: communication IF
- 103: decoder
- 104: HDMI circuit
- 105: memory
- 106: control circuit
- 107: display device
- 111: expander
- 112: sharpness adjuster
- 113: CPU

## Claims

1. A video signal processing device comprising:
an obtainer that obtains a first video signal through broadcast or through communication via a network;
an expander that performs an up-scaling process of expanding the first video signal obtained, according to a first parameter which is set; and
a processor that: (i) when the first video signal is a broadcast video signal obtained through the broadcast and a resolution of the first video signal has changed, changes the first parameter according to the resolution changed; and (ii) when the first video signal is a communication video signal obtained through the communication, sets the first parameter to a fixed value.

2. The video signal processing device according to claim 1, further comprising:
a sharpness adjuster that performs sharpness adjustment on a second video signal according to a second parameter which is set, the second video signal being obtained by performing the up-scaling process on the first video signal, wherein
when the second video signal is a video signal obtained by performing the up-scaling process on the communication video signal, the processor adjusts the second parameter to more emphasize sharpness than when the second video signal is a video signal obtained by performing the up-scaling process on the broadcast video signal.

3. The video signal processing device according to claim 2, wherein
the processor adjusts the second parameter to more emphasize sharpness as the resolution decreases.

4. The video signal processing device according to claim 2 or 3, wherein
the processor adjusts the second parameter to emphasize sharpness in a first frequency band within a spatial frequency band occupied by the first video signal, and
the first frequency band is on a high-frequency side of the spatial frequency band.

5. The video signal processing device according to claim 4, wherein
when the sharpness is emphasized, the processor adjusts the second parameter to shift the first frequency band to a higher-frequency side.

6. The video signal processing device according to claim 4, wherein
when the sharpness is emphasized, the processor adjusts the second parameter to increase a sharpness gain.

7. The video signal processing device according to claim 4, wherein
when the sharpness is emphasized, the processor adjusts the second parameter to shift the first frequency band to a higher-frequency side and increase a sharpness gain.

8. A video signal processing method comprising:
obtaining a first video signal through broadcast or through communication via a network;
performing an up-scaling process of expanding the first video signal obtained, according to a first parameter which is set; and
(i) when the first video signal is a broadcast video signal obtained through the broadcast and a resolution of the first video signal has changed, changing the first parameter according to the resolution changed; and (ii) when the first video signal is a communication video signal obtained through the communication, setting the first parameter to a fixed value.

9. A program for causing a computer to execute the video signal processing method according to claim 8.
